# EUROPÄISCHE PATENTSCHRIFT

(11) **EP 3 583 992 B1**
(45) Veröffentlichungstag und Bekanntmachung des Hinweises auf die Patenterteilung: **19.05.2021**
(21) Anmeldenummer: 19178127.7
(22) Anmeldetag: 04.06.2019
(51) Int. Cl.: B01D 35/04, E03C 1/08

(54) **FILTEREINSATZ FÜR EINE WASSERAUSLAUFARMATUR MIT TRINKWASSERFILTER**
FILTER INSERT FOR A WATER DRAIN FITTING WITH DRINKING WATER FILTER
INSERT DE FILTRE POUR UNE ROBINETTERIE D'ÉCOULEMENT D'EAU POURVU DE FILTRE À EAU POTABLE

(30) Priorität: 18.06.2018 DE 102018114582
(43) Veröffentlichungstag der Anmeldung: 25.12.2019
(73) Patentinhaber: Franke Technology and Trademark Ltd, 6052 Hergiswil (CH)
(72) Erfinder: LEUTWILER, Markus, 5612 Villmergen (CH); RÜEGG, Andreas, 6024 Hildisrieden (CH); KELLENBERGER, Christoph, 8005 Zürich (CH); LOEPFE, Michael, 8006 Zurück (CH)
(74) Vertreter: Lemcke, Brommer & Partner Patentanwälte Partnerschaft mbB

(56) Entgegenhaltungen:
- WO-A1-91/10493
- DE-A1- 1 609 060
- DE-A1- 19 618 692
- US-A1- 2010 096 314
- US-B1- 6 251 274

## Beschreibung

Die vorliegende Erfindung betrifft einen Filtereinsatz zur Verwendung in einer Wasserauslaufarmatur mit integriertem Trinkwasserfilter, wobei der Filtereinsatz eine allseitig geschlossene Bauform mit einem innenseitigen Hohlraum aufweist und zumindest ein Teil seiner Außenfläche als filteraktive Fläche ausgebildet ist, die von zu filterndem Wasser von außen nach innen durchdrungen wird, und der Filtereinsatz eine Mündungsöffnung aufweist, durch die gefiltertes Wasser aus dem innenseitigen Hohlraum ausströmen kann.

In vielen Gegenden entspricht die Qualität des Wassers aus der öffentlichen Wasserversorgung oder aus einer hauseigenen Wasserversorgung nicht den Hygieneanforderungen an Trinkwasser. In diesem Fall können Trinkwasserfilter eingesetzt werden, um im Brauchwasser enthaltene Verunreinigungen herauszufiltern. Bekannt sind zu diesem Zweck nachrüstbare Filteraufsätze, die auf die Mündungsöffnung des Wasserauslaufs einer Armatur aufgeschraubt oder aufgesteckt werden und einen entsprechenden Trinkwasserfilter enthalten. Derartige nachrüstbaren Filteraufsätze sind beispielsweise in den Dokumenten EP 798424 A2, JP 2002/310357, JP 2002/331298 A, WO 1999/037375 A1 oder WO 99/29391 A1 beschrieben. Solche auf den Auslauf einer Armatur aufgesetzte Anbaufilter sind jedoch sperrig und dadurch unpraktisch und sind bei normalem Gebrauch der Armatur im Wege wie z.B. bei der Entnahme von Brauchwasser zum Abspülen oder Händewaschen.

In der US 2010/0096314 A1 ist ein Filtergehäuse zum Aufschrauben auf einen Wasserauslauf beschrieben. In dem Filtergehäuse ist eine Filterkartusche eingesetzt. Am Auslass der Filterkartusche befindet sich ein Strahlregler, der separat an der Auslassseite des Filtergehäuses eingesetzt ist. Ein ähnlicher Wasserfilter zum Aufschrauben auf einen Wasserauslauf ist in der DE 196 18 692 A1 gezeigt. Auch hier befindet sich am Auslass der Filterkartusche ein Strahlregler, der separat an der Auslassseite des Filtergehäuses eingesetzt ist.

Daneben sind Armaturen bekannt, die einen integrierten Trinkwasserfilter aufweisen. Beispielsweise zeigt die EP 2 249 942 B1 eine Armatur mit im Armaturenkörper integriertem Filter. Die Schrift US 2014/0215709 A1 beschreibt eine Armatur mit einem separaten Abgang am Armaturenkörper, auf den eine nach oben weisende Filterkartusche aufgesetzt werden kann, an der ein separater Auslauf für gefiltertes Wasser angebracht wird. Über diese Armatur kann somit wahlweise Brauchwasser und gefiltertes Trinkwasser entnommen werden.

Die in der WO 2013/044339 A1 beschriebene Armatur besitzt ebenfalls einen im Armaturenkorpus aufgenommenen Filter. Am Armaturenkorpus sind zwei Ausläufe angeordnet, aus denen wahlweise Brauchwasser und gefiltertes Trinkwasser entnommen werden kann. Auch die WO 2012/029412 A1 zeigt schematisch eine Armatur mit einem Auslauf für Brauchwasser, einen Filter sowie einen von dem Filter abgehenden separaten Auslauf für gefiltertes Wasser.

In der WO91/10493 wird ein Wasserfilter zum Einbau in eine Wasserleitung beschrieben. Der Filter besitzt ein Filtergehäuse mit einer darin eingesetzten Filterpatrone. Die Filterpatrone weist eine kragenförmige Austrittsöffnung mit einem Dichtring auf. Das gefilterte Wasser wird in eine Austrittsleitung des Filtergehäuses eingeleitet.

Nachteilig an solchen Armaturen mit integriertem Trinkwasserfilter ist, dass hinter dem Filter jeweils wasserführende Teile der Armatur wie insbesondere Ventile, ein rohrförmiger Auslauf, oder im Armaturenkörper ausgebildete Wasserwege folgen, in denen sich Keime ansiedeln können, die das gefilterte Wasser verunreinigen. Eine solche Keimbildung innerhalb der Armatur kann insbesondere in warmen Gegenden problematisch sein. Gefiltertes Trinkwasser könnte daher hinter dem Filter unbemerkt mit Krankheitskeimen kontaminiert werden.

Es ist daher eine Aufgabe der vorliegenden Erfindung, einen Filtereinsatz für eine Wasserauslaufarmatur mit integriertem Trinkwasserfilter anzugeben, welcher in Hinblick auf die Hygiene und Sicherheit verbessert ist.

Die Aufgabe wird gelöst durch die Merkmale des Anspruchs 1. Vorteilhafte Ausgestaltungen sind den abhängigen Ansprüchen zu entnehmen.

Bei einer Wasserauslaufarmatur der eingangs genannten Art ist erfindungsgemäß vorgesehen, dass an dem Filtereinsatz ein in Form eines Kragens nach außen weisendes Mündungsstück ausgebildet ist, welches von einer Öffnung in einem armaturenseitigen Filtergehäuse aufgenommen werden kann und aus welchem gefiltertes Wasser ohne Kontakt zu dem Filtergehäuse frei ausströmen kann. Gemäß der vorliegenden Erfindung ist somit vorgesehen, dass das gefilterte Trinkwasser direkt aus dem Filtereinsatz ausfließt und entnommen wird, so dass jede Keimbildung in einem daran anschließenden Wasserweg vermieden wird. Durch die geschlossene Bauform, stellt die komplette Außenseite der Filterpatrone, die beispielsweise beim Einsetzen angefasst wird und somit Kontaminationen ausgesetzt ist, die "unreine" Seite des Filtereinsatzes dar, während der Innenraum des Filtereinsatzes dessen reine Seite bildet und somit vor Umwelteinflüssen und Kontamination geschützt ist.

Außerdem umfasst das Mündungsstück zusätzlich einen integrierten Strahlregler. Ein solcher Strahlregler ist üblicherweise am Auslauf einer Armatur angeordnet und sorgt dafür, dass das Wasser mit der gewünschten Strahlcharakteristik, gegebenenfalls belüftet, aus dem Auslauf austritt. Ein solcher Strahlregler ist konstruktionsbedingt besonders anfällig für die Anlagerung von Verschmutzungen und kann eine Quelle von Keimbildung innerhalb der Armatur darstellen. Indem dieser Strahlregler nun integriert mit der Filterkartusche als Einwegartikel ausgebildet ist, entfällt dieser als Quelle für Keimbildung, ohne auf die mit einem Strahlregler verbundene Komfortfunktion verzichten zu müssen.

Das am Filtereinsatz angeordnete Mündungsstück kann im Auslieferungszustand außerdem mittels einer Abreißfolie steril versiegelt sein. Diese wird erst entfernt, wenn der Filtereinsatz in das Filtergehäuse eingesetzt wird. Somit ist der hygienisch einwandfreie Zustand des Filtereinsatzes gewährleistet, da die Mündungsöffnung als einzige Verbindungsstelle zwischen der sterilen Innenseite des Filtereinsatzes mit der Umwelt solange der Filtereinsatz nicht in Gebrauch ist, versiegelt ist.

Bei einer bevorzugten Ausführungsform ist der Filtereinsatz als zylindrische Filterpatrone mit einer Mantelfläche, zwei gegenüberliegenden Stirnflächen und mit einem axialen Innenraum ausgebildet, wobei das Mündungsstück vorzugsweise mittig an einer der Stirnflächen angeordnet ist. Die radialsymmetrische, insbesondere zylindrische Form von Filterpatrone und Filtergehäuse ist bevorzugt, da hierbei die Filterpatrone von außen angeströmt und das gefilterte Wasser direkt aus dem axialen Innenraum des Filters entnommen werden kann. Vorzugsweise ist die dem Mündungsstück abgewandte Stirnfläche der Filterpatrone hingegen wasserdicht verschlossen.

Die filteraktive Fläche wird im Wesentlichen von der Mantelfläche der zylindrischen Filterpatrone gebildet. Die Stirnflächen sind vorzugsweise als Kunststoffformteile ausgeführt, die über entlang der Mantelfläche in axialer Richtung verlaufenden und in Umfangsrichtung beabstandete Verbindungsstege miteinander verbunden sind. Eine solche Bauform ist kostengünstig und bietet ein stabiles Stützgerüst für den Filtereinsatz. Beispielsweise können die Kunststoffformteile als Spritzgussteile ausgeführt sein. Hierbei ist es insbesondere möglich, die Stirnfläche mit dem Mündungsstück und einem integrierten Strahlregler im selben Spritzgussteil zu integrieren, was die Herstellung erheblich vereinfacht.

Die Stützstruktur der Filterpatrone kann insbesondere zweiteilig, aus zwei miteinander verbundenen Kunststoffformteilen ausgeführt werden. Die Verbindung dieser Formteile kann lösbar, vorzugsweise mittels einer Schnappverbindung erfolgen, oder unlösbar, beispielsweise durch Verkleben oder durch UltraschallSchweißen.

Bei einer bevorzugten Bauform des Filtereinsatzes ist die filteraktive Fläche mit einer nanoporösen Polymermembran versehen. Eine solche nanoporöse Membrane weist eine Vielzahl von Poren im Nano-Bereich z.B. mit einer Porenweite von 5 - 400 nm, vorzugsweise 15 - 200 nm, auf. Die Poren in der Membran sorgen für einen ausreichenden Wasserdurchtritt. Im Wasser enthaltene Mikropartikel wie etwa mikrobiologische Verunreinigungen werden jedoch zurückgehalten, so dass das gefilterte Wasser keimfrei ist.

Eine solche nanoporöse Polymermembran kann hergestellt sein, indem Nanopartikel eines Salzes - also einer anorganischen Verbindung aus einem MetallKation und einem Nichtmetall-Anion - in einer flüssigen Polymerlösung in Suspension gebracht, die Polymerlösung auf ein Substrat zu einer dünnen Membrane ausgestrichen und auspolymerisiert wird und die Salzpartikel anschließend mit einem geeigneten Lösungsmittel - vorzugsweise Wasser - aus der von dem Polymer gebildeten Matrix herausgelöst werden.

Innenseitig der nanoporösen Polymermembran kann eine zusätzliche Filterlage mit Aktivkohle angeordnet sein. Diese dient als Adsorptionsmittel zur Entfernung etwaiger nach Durchdringen der nanoporösen Membrane im Wasser noch verbliebener Farb-, Geschmacks- und Geruchsstoffe. Insbesondere werden durch die Aktivkohleschicht gelöste Gase wie etwa Chlor und Ozon entfernt und so der Geschmack des gefilterten Wassers erheblich verbessert.

Alternativ oder kumulativ kann innenseitig der nanoporösen Polymermembran eine zusätzliche Filterlage mit aktiven Silberpartikeln angeordnet sein. Diese sorgt durch die antimikrobakterielle Wirkung feiner Silberpartikel (Nano-Silber) dafür, dass sich im Filter keine Mikroorganismen bilden und diesen von innen heraus verunreinigen können.

Schließlich kann außenseitig der nanoporösen Polymermembran als Vorfilter eine zusätzliche Filterlage aus Filtervlies angeordnet sein. Durch ein solches Filtervlies werden gröbere Schwebstoffe und Verunreinigungen im Wasser wie etwa Mikroplastik-Teile abgehalten und können sich so nicht auf der nanoporösen Membrane niederschlagen und diese zusetzen.

Ein Filtereinsatz mit dem genannten Filteraufbau ist kostengünstig in der Herstellung, kann sehr kompakt gebaut werden und ermöglicht dennoch eine hohe Durchflussrate von bis zu 8 l/min bei einem Außendruck von 3 bar. Er ermöglicht eine nahezu 100%-tige Entfernung von Schwebstoffen, Mikroorganismen und Krankheitserregern (> 99%), Rost, Mikroplastik, sowie unangenehmen Geschmacks- und Geruchstoffen.

Um den Filtereinsatz gegenüber einem armaturenseitigen Filtergehäuse zu dichten kann um das Mündungsstück eine nach außen abstehende, ringförmige Dichtung angebracht sein. Somit wird mit dem Filtereinsatz automatisch auch die Dichtung zwischen Filtereinsatz und Filtergehäuse getauscht, so dass sich keine Undichtigkeiten durch verschlissene Dichtungen ergeben können, durch die ungefiltertes Wasser am Filtereinsatz vorbei zu dessen Mündungsöffnung gelangen und das gefilterte Wasser auf diese Weise verunreinigen könnte.

Außerdem wird eine Wasserauslaufarmatur mit integriertem Trinkwasserfilter angegeben. Diese weist einen Armaturenkörper mit mindestens einem Wasserzulauf, einen von dem Armaturenkörper abzweigenden Auslauf für gefiltertes Trinkwasser und einen von Wasser durchströmbaren Filteraufnahmeraum für einen Trinkwasserfilter auf, der mit dem Auslauf in wasserführender Verbindung steht. Erfindungsgemäß wird der Filteraufnahmeraum von einem Filtergehäuse gebildet, das an dem von dem Armaturenkörper abgewandten Ende des Auslaufs angeordnet ist. Das Filtergehäuse besitzt einen nach unten weisenden Boden mit einer Öffnung. In das Filtergehäuse ist ein Filtereinsatz der vorstehend beschriebenen Art eingesetzt, dessen nach außen weisendes Mündungsstück von der Öffnung im Boden des Filtergehäuses aufgenommen ist, so dass gefiltertes Wasser ohne Kontakt zu dem Filtergehäuse frei ausströmen kann. Weitere Vorteile und Ausgestaltungen der vorliegenden Erfindung ergeben sich aus der nachfolgenden Beschreibung bevorzugter Ausführungsbeispiele anhand der Figuren. Diese zeigen:
Figur 1 eine isometrische Darstellung einer zylindrischen Filterpatrone mit daran angebrachtem Mündungsstück,
Figur 2 Draufsicht auf die Unterseite der Filterpatrone aus Figur 2,
Figur 3 einen Längsschnitt durch die Filterpatrone aus Figur 1 mit zusätzlicher, am Mündungsstück angebrachter Abreißfolie,
Figur 4 das Detail X aus Figur 3 betreffend die Rastverbindung der Gehäuseteile der Filterpatrone,
Figur 5 eine schematische Zeichnung des Aufbaus der Filterlagen, die bei einer Filterpatrone wie in Figur 1 zum Einsatz kommen,
Figur 6 eine isometrische Darstellung einer Wasserauslaufarmatur mit einem separaten Auslauf für gefiltertes Wasser, an dessen Ende ein Filtergehäuse zur Aufnahme einer Filterpatrone angeordnet ist und
Figur 7 einen Längsschnitt durch das Filtergehäuse der Armatur aus Figur 6.

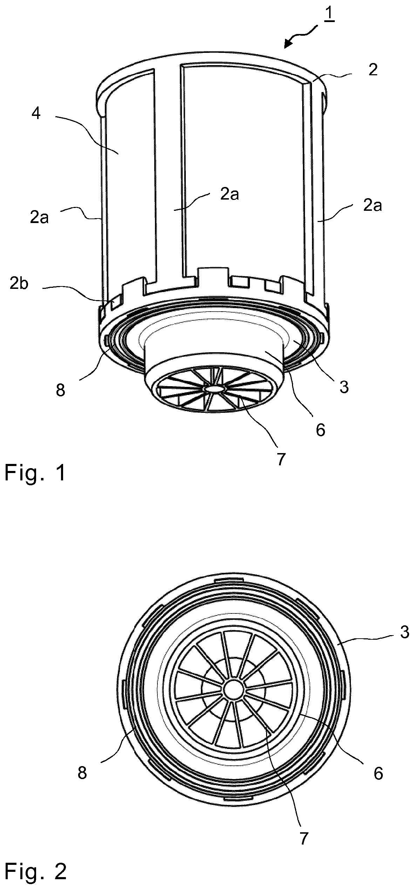

In den Figuren 1 bis 3 ist eine zylindrische Filterpatrone 1 dargestellt, die als Filtereinsatz zur Filterung von Trinkwasser in einer Wasserauslaufarmatur eingesetzt wird. Die Stirnflächen der zylindrischen Filterpatrone 1 werden von Gehäuseteilen 2, 3 aus Kunststoff gebildet und die Mantelfläche 4 wirkt als filteraktive Fläche und wird von zu filterndem Wasser von außen nach innen durchdrungen. Das obere Gehäuseteil 2 umfasst die obere Stirnfläche der Filterpatrone 1 und verschließt diese wasserdicht. Von dieser führen Verbindungsstege 2a zu einem unteren Abschlussring 2b. Insgesamt sind vier Verbindungsstege 2a in Umfangsrichtung verteilt angeordnet. An dem Abschlussring 2b ist das untere Gehäuseteil 3, welches die untere Stirnfläche der Filterpatrone 1 bildet, mittels Schnappverbindungen befestigt.

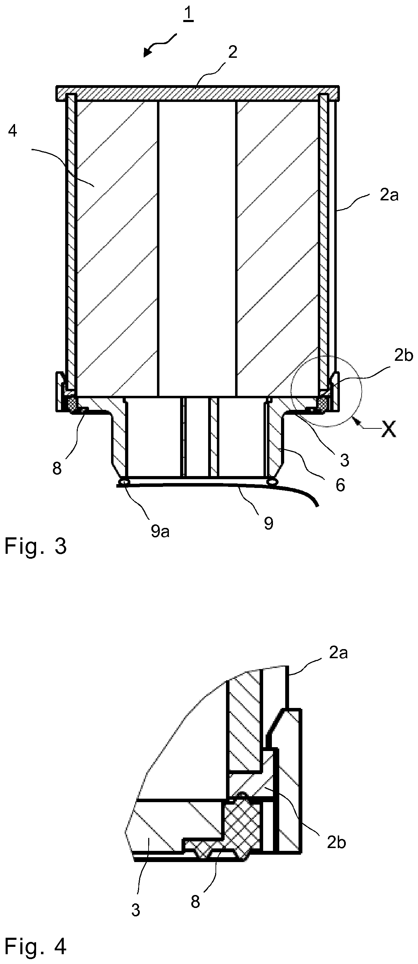

Die Gehäuseteile 2, 3 sind als Kunststoffspritzgussteile ausgeführt und bilden ein stabilisierendes Gerüst für die Filterpatrone 1. Innerhalb dieses Gerüsts sind in mehreren Lagen die filteraktiven Schichten 4 angeordnet. Sie umschließen einen axialen Innenraum 5 (siehe Figur 3), in welchem sich das gefilterte Wasser gelangt. An der Unterseite der Filterpatrone 1 ist an deren unterem Gehäuseteil 3 ein Mündungsstück 6 ausgebildet. Dieses bildet eine Mündungsöffnung, zu der Wasser aus dem axialen Innenraum 5 aus der Filterpatrone 1 ausströmen kann.

In das Mündungsstück 6 ist ein Strahlregler 7 einstückig integriert. Ein Strahlregler ist üblicherweise am Auslauf einer Armatur angeordnet und sorgt dafür, dass das Wasser mit der gewünschten Strahlcharakteristik, gegebenenfalls belüftet, aus dem Auslauf austritt. Ein solcher Strahlregler ist konstruktionsbedingt besonders anfällig für die Anlagerung von Verschmutzungen und kann daher eine Quelle von Keimbildung innerhalb der Armatur darstellen. Indem der Strahlregler nun integriert mit der Filterpatrone 1 als Einwegpartikel ausgebildet ist, entfällt dieser als Quelle für Keimbildung, ohne auf die mit einem Strahlregler verbundene Komfortfunktion verzichten zu müssen.

An der Unterseite des unteren Gehäuseteils 3 ist außerdem eine Dichtung 8 angebracht. Diese liegt ringförmig mit einigem Abstand um das Mündungsstück 6 und sorgt dafür, dass die Filterpatrone 1, wenn sie in ein armaturenseitiges Filtergehäuse eingesetzt wird, gegenüber dem Boden des Filtergehäuses abgedichtet ist. Im Ausführungsbeispiel ist die Dichtung 8 zweilippig ausgeführt, das heißt sie besitzt zwei nebeneinander angebrachte, nach unten weisende Dichtlippen. Die Dichtung 8 ist in eine nach unten hin offene Nut im Bodenteil 3 der Filterpatrone 1 eingesetzt.

Die beiden Gehäuseteile 2, 3 der Filterpatrone sind im Ausführungsbeispiel mittels Schnappverbindungen miteinander verrastet. Hierzu sind am unteren Gehäuseteil 3 mehrere in Umfangsrichtung verteilte Schnapphaken 3a angeformt, die in umfangsseitige Aussparungen im unteren Abschlussring 2b des oberen Gehäuseteils 2 eingreifen und dort verrasten. Das in Figur 4 gezeigte Detail X aus Figur 3 zeigt die Schnappverbindung zwischen oberem und unterem Gehäuseteil in einer vergrößerten Darstellung. Eine solche Schnappverbindung ist besonders kostengünstig und einfach herzustellen. Selbstverständlich sind auch andere Möglichkeiten, die Gehäuseteile 2 und 3 zu verbinden, im Rahmen der vorliegenden Erfindung möglich und von dieser mit umfasst. Beispielsweise können die Gehäuseteile mittels Ultraschallschweißen stoffschlüssig verbunden werden.

In Figur 3 ist außerdem gezeigt, dass die von dem Mündungsstück 6 gebildete Mündungsöffnung von einer Abreißfolie 9 steril verschlossen ist. Die Abreißfolie 9 kann wie in Figur 3 angedeutet, mittels einer Klebstofffuge 9a aufgebracht sein. Ebenso ist es möglich, die Abreißfolie 9 mit dem Mündungsstück zu verschweißen. Die Abreißfolie 9 verhindert das Eindringen von Keimen und Schmutz während der Lagerung der Patrone. Vor dem Einsetzen der Filterpatrone 1 in ein armaturenseitiges Filtergehäuse wird die Abreißfolie entfernt. Die Patrone 1 ist nun einsatzbereit.

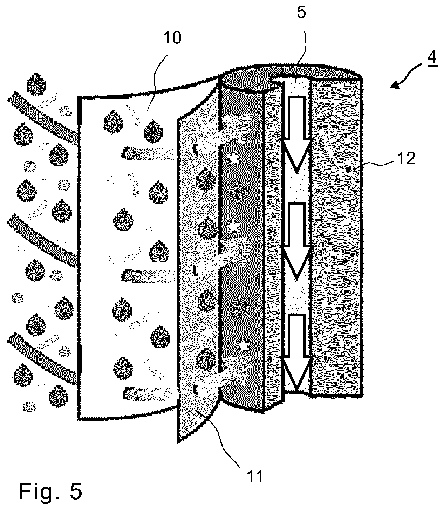

In Figur 5 ist schematisch der Aufbau der filteraktiven Schichten 4 gezeigt. Die äußerste Filterlage wird von einem Filtervlies 10 gebildet. Dieses wirkt als Vorfilter für gröbere, im Wasser enthaltene Verschmutzungen und Schwebstoffe. Anschließend kommt als nächste Filterlage eine nanoporöse Polymermembran 11. Eine solche Membran ist beispielsweise in der Schrift WO 2012/097967 A1 beschrieben, auf die zur Vermeidung unnötiger Wiederholungen hiermit voll inhaltlich Bezug genommen wird. Sie weist Poren mit einer Porenweite im Bereich zwischen 15 und 200 nm auf. Die Poren in der Membran sorgen für einen ausreichenden Wasserdurchtritt. Im Wasser enthaltene Mikropartikel wie etwa mikrobiologische Verunreinigungen, Bakterien, Viren und dergleichen werden jedoch zurückgehalten, sodass das gefilterte Wasser keimfrei ist. Zuinnerst kommt schließlich eine Filterschicht 12 aus bzw. mit Aktivkohle. Diese sorgt dafür, dass auch im Wasser enthaltene Gase wie Chlor oder Ozon adsorbiert werden und das gefilterte Wasser somit geruchs- und geschmacksneutral ist. Die Filterlage 12 kann zusätzlich aktive Silberpartikel enthalten, die keimtötend wirken und somit dafür sorgen, dass im Inneren des Filters keine Keimbildung stattfinden kann. Die Filterlagen 10, 11, 12 umschließen den axialen Innenraum 5 des Filters, aus dem in axialer Richtung nach unten gefiltertes Wasser durch die von dem Mündungsstück 6 gebildete Mündungsöffnung tritt.

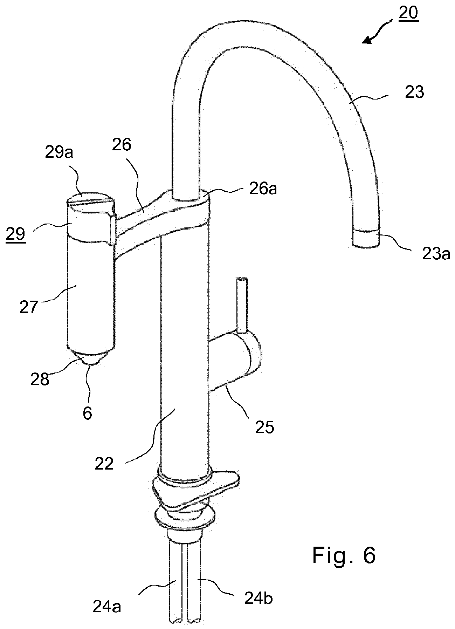

In Figur 6 ist schließlich eine Wasserauslaufarmatur mit einem Auslauf für gefiltertes Wasser gezeigt, in dem eine erfindungsgemäße Filterpatrone als Filtereinsatz verwendet werden kann. Die in Figur 6 gezeigte Wasserauslaufarmatur 20 umfasst einen Armaturenkörper 22, der auf einer Arbeitsplatte oder einer Küchenspüle verschraubt wird. Nach oben hin erstreckt sich aus dem Armaturenkörper 22 ein gebogener Wasserauflauf 23 mit einem Mündungsstück 23a herkömmlicher Bauart, beispielsweise einem Strahlregler. Der Wasserauslauf 23 dient als Auslauf für Brauchwasser. Als Brauchwasser wird im Rahmen der Erfindung Warmwasser, Kaltwasser oder Mischwasser verstanden, wie es aus der öffentlichen Wasserversorgung oder einer hauseigenen Wasserversorgung bezogen wird, welches aber keine bzw. fragliche Trinkwasserqualität aufweist.

Die Wasserauslaufarmatur 20 hat zwei Zuleitungen 24a, 24b für Warmwasser und Kaltwasser sowie einen Ein-Hebel-Mischer 25 mit entsprechendem Ventileinsatz, mit dem das zugeführte Warm- und Kaltwasser gemischt und über den Wasserauslauf 23 ausgegeben werden kann. Innerhalb des Armaturenkörpers 22 führen somit in an sich ebenfalls bekannter Weise Wasserwege von den Zuleitungen 24a, 24b zum Mischventil 25 und von dort zum Wasserauslauf 23.

Im oberen Bereich des Armaturenkörpers 22 zweigt eine zweite Auslaufleitung 26 ab, an deren Ende ein senkrecht nach unten weisendes Filtergehäuse 27 angeordnet ist. Im Bereich der Abzweigung ist die Auslaufleitung 26 in Form einer ringförmigen Schulter 26a ausgebildet, die konzentrisch um die nach oben weisende Auslaufleitung 23 liegt und um die Mittelachse des Armaturenkörpers 22 schwenkbar ist. Ein Wasserweg für Kaltwasser verläuft innenseitig des Armaturenkörpers 22 zu der Schulter 26a und mündet dort in einem innerhalb der Schulter 26a ausgebildeten, umfangseitig offenen und gegenüber der Schulter 26a gleitend gedichteten Ringraum, über den das Wasser in den zweiten Auslauf 26 gelangt.

Das Filtergehäuse 27 ist in etwa zylindrisch ausgebildet und läuft zu seinem Boden 28 hin kegelförmig zusammen. In der Mitte dieses kegelförmigen Bodenbereichs 8 befindet sich eine Öffnung 28a, aus der gefiltertes Trinkwasser ausgegeben werden kann. Hierzu ist im oberen Bereich des Filtergehäuses 27 ein Ventil 29 mit einem Drehgriff 29a angeordnet. Wird dieses Ventil 29 geöffnet, so strömt Wasser über die Auslaufleitung 26 in einen äußeren Ringbereich 27a des Filtergehäuses 27, dringt durch die filteraktiven Lagen 4 der im Filtergehäuse 27 eingesetzten Filterpatrone 1 hindurch und wird axial über das Mündungsstück 6 ausgegeben.

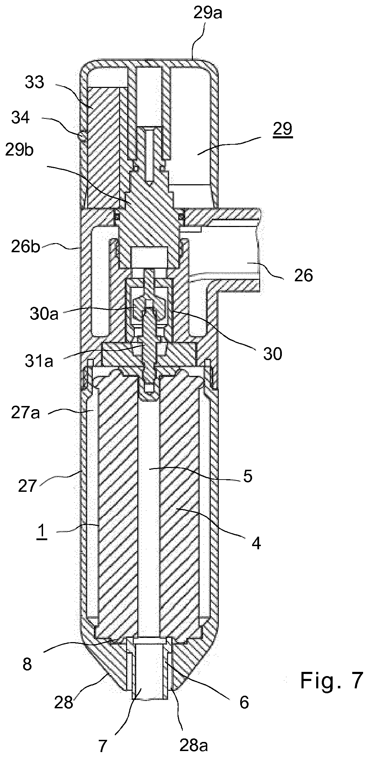

In Figur 7 ist das Filtergehäuse 27 vergrößert in einem Längsschnitt dargestellt. Die Filterpatrone 1 weist am unteren Ende das Mündungsstück 6 auf, welches in Form eines nach unten weisenden Kragens um die Austrittsöffnung des axialen Innenraums 5 liegt. Der Durchmesser der Öffnung 28a im Boden 28 des Filtergehäuses 27 ist so bemessen, dass das Mündungsstück 6 hindurch passt und von der Öffnung 28a aufgenommen wird. Gefiltertes Wasser strömt somit durch das Mündungsstück 6 aus, ohne in Kontakt mit dem Filtergehäuse 27 zu gelangen.

Im oberen Bereich des Filtergehäuses 27 ist das Schließventil 29 mit seinem Ventilgriff 29a und einem darunter befindlichen Ventileinsatz 29b zu sehen. Durch Drehen des Ventilgriffs 29a wird eine Spindel des Ventileinsatzes 29b betätigt und das Ventil 29 gibt den Wasserweg von der Auslaufleitung 26 kommend ins Filtergehäuse 27 frei.

Zwischen dem Ventileinsatz 29b und dem Filtergehäuse 27 befindet sich außerdem ein Rückschlagventil 30 mit einem Schließkörper 30a, der von einem Bestätigungsstift 31a nach oben in seiner geöffneten Stellung gehalten wird. Der Bestätigungsstift 31a wiederum wird von der in das Filtergehäuse 27 eingesetzten Filterpatrone 1 nach oben gehalten, sodass das Rückschlagventil 30 bei eingesetzter Filterpatrone 1 und aufgeschraubtem Filtergehäuse 27 geöffnet ist.

Am Ende der Wasserauslaufleitung 26 ist ein nach unten weisender Aufnahmesockel 26b für das Filtergehäuse 27 angeformt, an dem dieses mittels eines Schraub- oder Bajonett-Verschlusses wasserdicht befestigt ist. Wird das Filtergehäuse 27 abgenommen, um den Filtereinsatz 1 zu wechseln, so wird durch den Wasserdruck oder alternativ eine (hier nicht gezeigte) Schließfeder der Ventilkörper 30a nach unten in seine Schließstellung bewegt, sodass kein Wasser aus der Auslaufleitung 26 austreten kann.

Im Betrieb fließt Wasser aus der Auslaufleitung 26 bei geöffnetem Ventil 29 und eingesetzter Filterpatrone 1 in einen äußeren Ringraum 27a des Filtergehäuses 27. Von dort durchströmt es das Filtermaterial 4 der Filterpatrone 1 und gelangt in den axialen Hohlraum 5 der Filterpatrone. Von dort fließt es durch das an der Unterseite der Filterpatrone 1 angeformte Mündungsstück 6, welches durch die Öffnung 28a im Boden 28 des Filtergehäuses 27 hindurch ragt, aus dem Auslass der Armatur 20 heraus, beispielsweise in ein von einem Benutzer darunter platziertes Trinkgefäß.

Als eine zusätzliche (optionale) Funktion ist in die Ventilkappe 29a eine batteriebetriebene elektrische Schaltung 33 integriert, die über eine mehrfarbige Leuchtdiode 34 Auskunft über den Zustand des Filtereinsatzes 1 gibt. Im Ausführungsbeispiel enthält die Schaltung 33 lediglich einen Timer, der nach Austausch der Filterpatrone 1 zurückgesetzt wird und nach Ablauf einer voreingestellten Betriebszeit für die Filterpatrone 1 an einen Austausch erinnert. Möglich ist jedoch alternativ oder kumulativ auch die Verwendung eines im Wasserweg angeordneten Durchflussmessers, beispielsweise in Form eines Flügelradzählers, so dass ein Austausch der Filterpatrone 1 in Abhängigkeit der gefilterten Wassermenge angezeigt werden kann. Solange die Filterpatrone 1 in innerhalb ihrer vorgesehenen Verwendungsdauer ist, blinkt die Leuchtdiode 34 grün (z.B. alle 5 sec). Nach Ablauf der vorgesehenen Verwendungsdauer, wenn also ein Austausch der Filterpatrone 1 empfohlen wird, wechselt die Farbe der Leuchtdiode 34 auf rot. Ist ein Austausch der Filterpatrone überfällt und die Trinkqualität des Filterwassers somit nicht mehr gewährleistet, so wird als Warnung zusätzlich die Blinkfrequenz erhöht, z.B. schnelles Blinken 1x pro Sekunde.

Wie bereits erläutert, ist die obere Stirnseite der Filterpatrone 1 durch deren oberes Gehäuseteil 2 verschlossen. Der Bestätigungsstift 31a stützt sich bei eingesetzter Filterpatrone 1 an der Oberseite des Gehäuseteils 2 ab und wird von diesem in seiner oberen Stellung gehalten, in der er das Rückschlagventil 30 in Offenstellung hält. Die Dichtung 8 an der Unterseite der Filterpatrone 1 dichtet den äußeren Ringraum 27a des Filtergehäuses 27 nach unten hin gegen den Boden 28 des Filtergehäuses 27 ab, sodass aus der Auslaufleitung 26 eingeströmtes Wasser lediglich nach Durchdringen der filteraktiven Schichten 4 in den axialen Innenraum 5 des Filtereinsatzes 1 gelangen kann und von dort durch das am Filtereinsatz angebrachte Mündungsstück 6 ausfließen kann.

## Patentansprüche

1. Filtereinsatz (1) zur Verwendung in einer Wasserauslaufarmatur (20) mit integriertem Trinkwasserfilter, wobei der Filtereinsatz (1) eine allseitig geschlossene Bauform mit einem innenseitigen Hohlraum (5) aufweist und zumindest ein Teil seiner Außenfläche (4) als filteraktive Fläche ausgebildet ist, die von zu filterndem Wasser von außen nach innen durchdrungen wird, und der Filtereinsatz (1) eine Mündungsöffnung aufweist, durch die gefiltertes Wasser aus dem innenseitigen Hohlraum (5) ausströmen kann, wobei an dem Filtereinsatz (1) ein in Form eines Kragens nach außen weisendes, die Mündungsöffnung bildendes Mündungsstück (6) ausgebildet ist, welches von einer Öffnung (28a) in einem armaturenseitigen Filtergehäuse (27) aufgenommen werden kann und aus welchem gefiltertes Wasser ohne Kontakt zu dem Filtergehäuse (27) frei ausströmen kann und dass das Mündungsstück (6) einen integrierten Strahlregler (7) aufweist.

2. Filtereinsatz nach Anspruch 1, bei der das Mündungsstück (6) im Auslieferungszustand mittels einer Abreißfolie (9) steril versiegelt ist.

3. Filtereinsatz nach einem der vorangehenden Ansprüche, welcher als zylindrische Filterpatrone mit einer Mantelfläche, zwei gegenüberliegenden Stirnflächen und mit einem axialen Innenraum ausgebildet ist, wobei das Mündungsstück (6) vorzugsweise mittig an einer der Stirnflächen angeordnet ist.

4. Filtereinsatz nach Anspruch 3, bei dem die zweite, dem Mündungsstück (6) abgewandte Stirnfläche der Filterpatrone wasserdicht verschlossen ist.

5. Filtereinsatz nach Anspruch 3 oder 4, bei dem die filteraktive Fläche (4) im Wesentlichen von der Mantelfläche gebildet wird und die Stirnflächen als Kunststoffformteile (2, 3) ausgeführt sind, die über entlang der Mantelfläche in axialer Richtung verlaufenden und in Umfangsrichtung beabstandete Verbindungsstege (2a) miteinander verbunden sind.

6. Filtereinsatz nach einem der vorangehenden Ansprüche, bei der die filteraktive Fläche (4) mit einer nanoporösen Polymermembran (11) versehen ist.

7. Filtereinsatz nach Anspruch 6, bei der die nanoporöse Polymermembran (11) Poren mit einer Porenweite von 5 - 400 nm, vorzugsweise 15 - 200 nm, aufweist.

8. Filtereinsatz nach Anspruch 6 oder 7, bei der innenseitig der nanoporösen Polymermembran (11) eine zusätzliche Filterlage mit Aktivkohle (12) angeordnet ist.

9. Filtereinsatz nach einem der Ansprüche 6 bis 8, bei der innenseitig der nanoporösen Polymermembran (11) eine zusätzliche Filterlage mit aktiven Silberpartikeln angeordnet ist.

10. Filtereinsatz nach einem der Ansprüche 6 bis 9, bei der außenseitig der nanoporösen Polymermembran (11) als Vorfilter eine zusätzliche Filterlage aus Filtervlies (10) angeordnet ist.

11. Filtereinsatz nach einem der vorangehenden Ansprüche, bei der um das Mündungsstück (6) eine nach außen abstehende, ringförmige Dichtung (8) angebracht ist.

12. Wasserauslaufarmatur (20) zur Abgabe von gefiltertem Trinkwasser, welche
einen Armaturenkörper (22) mit mindestens einem Wasserzulauf (24a, 24b), einen von dem Armaturenkörper (22) abzweigenden Auslauf (26) für gefiltertes Trinkwasser und einen von Wasser durchströmbaren Filteraufnahmeraum für einen Trinkwasserfilter aufweist, der mit dem Auslauf (26) in wasserführender Verbindung steht,
**dadurch gekennzeichnet, dass**
der Filteraufnahmeraum von einem Filtergehäuse (27) gebildet wird, das an dem von dem Armaturenkörper (22) abgewandten Ende des Auslaufs (26) angeordnet ist, dass das Filtergehäuse (27) einen nach unten weisenden Boden (28) aufweist, in welchem eine Öffnung (28a) ausgebildet ist, dass in den Filteraufnahmeraum ein Filtereinsatz (1) nach einem der vorangehenden Ansprüche eingesetzt ist und dass dessen nach außen weisendes Mündungsstück (6) von der Öffnung (28a) im Boden (28) des Filtergehäuses (27) aufgenommen ist, so dass gefiltertes Wasser ohne Kontakt zu dem Filtergehäuse (27) frei ausströmen kann.

## Claims

1. Filter insert (1) for use in a water outlet fitting (20) having an integrated drinking water filter, wherein the filter insert (1) is closed on all sides and has an internal cavity (5) and at least a portion of its outer surface (4) is in the form of a surface having a filtering action through which water to be filtered passes from the outside to the inside, and the filter insert (1) has an outlet opening through which filtered water is able to flow out of the internal cavity (5), wherein an outward-facing nozzle (6) in the form of a collar is formed on the filter insert (1), which nozzle forms the outlet opening and can be received by an opening (28a) in a fitting-side filter housing (27) and out of which nozzle filtered water is able to flow freely without making contact with the filter housing (27); and the nozzle (6) has an integrated aerator (7).

2. Filter insert according to claim 1, wherein in the delivered state the nozzle (6) is sterile-sealed by means of a tear-off film (9).

3. Filter insert according to either one of the preceding claims, which is in the form of a cylindrical filter cartridge having a lateral surface and two oppositely located end faces and having an axial interior chamber, wherein the nozzle (6) is preferably arranged centrally on one of the end faces.

4. Filter insert according to claim 3, wherein the second end face of the filter cartridge, remote from the nozzle (6), is water-tightly closed.

5. Filter insert according to claim 3 or 4, wherein the surface (4) having a filtering action is formed substantially by the lateral surface, and the end faces are in the form of plastics mouldings (2, 3) connected to one another by means of connecting ribs (2a) which run along the lateral surface in an axial direction and are spaced apart from one another in a circumferential direction.

6. Filter insert according to any one of the preceding claims, wherein the surface (4) having a filtering action is provided with a nanoporous polymer membrane (11).

7. Filter insert according to claim 6, wherein the nanoporous polymer membrane (11) has pores having a pore width of 5 - 400 nm, preferably 15 - 200 nm.

8. Filter insert according to claim 6 or 7, wherein on the inner side of the nanoporous polymer membrane (11) there is arranged an additional filter layer having activated carbon (12).

9. Filter insert according to any one of claims 6 to 8, wherein on the inner side of the nanoporous polymer membrane (11) there is arranged an additional filter layer having active silver particles.

10. Filter insert according to any one of claims 6 to 9, wherein on the outer side of the nanoporous polymer membrane (11) there is arranged, as pre-filter, an additional filter layer made of filter fleece (10).

11. Filter insert according to any one of the preceding claims, wherein an outwardly projecting annular seal (8) is mounted around the nozzle (6).

12. Water outlet fitting (10) for dispensing filtered drinking water, which has a fitting body (22) having at least one water inlet (24a, 24b), an outlet (26) for filtered drinking water, which outlet branches off from the fitting body (22), and a filter-receiving space for a drinking water filter, through which water is able to flow and which is in water-conducting connection with the outlet (26),
**characterised in that**
the filter-receiving space is formed by a filter housing (27) which is arranged at the end of the outlet (26) remote from the fitting body (22); the filter housing (27) has a downward-facing base (28) in which an opening (28a) is provided; a filter insert (1) according to any one of the preceding claims is installed in the filter-receiving space; and the outward-facing nozzle (6) of the filter insert is accommodated by the opening (28a) in the base (28) of the filter housing (27) so that filtered water is able to flow out freely without making contact with the filter housing (27).

## Revendications

1. Cartouche filtrante (1) dévolue à l'utilisation dans une robinetterie (20) de sortie d'eau équipée d'un filtre d'eau potable intégré, ladite cartouche filtrante (1) présentant un agencement structurel fermé de toutes parts, muni d'une cavité intérieure (5), au moins une partie de sa surface extérieure (4) étant réalisée sous la forme d'une surface à activité filtrante traversée, de l'extérieur vers l'intérieur, par de l'eau à filtrer, et la cartouche filtrante (1) étant pourvue d'un orifice d'embouchure par l'intermédiaire duquel de l'eau filtrée peut sortir de ladite cavité intérieure (5),
sachant qu'un embout (6), ménagé sur ladite cartouche filtrante (1), pointe vers l'extérieur sous la forme d'un collet, matérialise ledit orifice d'embouchure et peut être logé dans une ouverture (28a) pratiquée dans un carter (27) de filtre situé côté robinetterie, embout à partir duquel de l'eau filtrée peut sortir librement sans contact avec ledit carter (27) de filtre, et sachant que ledit embout (6) est doté d'un régulateur de jet (7) intégré.

2. Cartouche filtrante selon la revendication 1, dans laquelle l'embout (6) est scellé de manière stérile à l'état de distribution, au moyen d'un film arrachable (9).

3. Cartouche filtrante selon l'une des revendications précédentes, réalisée sous la forme d'une garniture filtrante cylindrique comprenant une surface d'enveloppe, deux surfaces extrêmes opposées et un espace intérieur axial, l'embout (6) occupant, de préférence, un emplacement central sur l'une desdites surfaces extrêmes.

4. Cartouche filtrante selon la revendication 3, dans laquelle la seconde surface extrême de la garniture filtrante, tournée à l'opposé de l'embout (6), est obturée avec étanchéité à l'eau.

5. Cartouche filtrante selon la revendication 3 ou 4, dans laquelle la surface (4) à activité filtrante est formée pour l'essentiel par la surface de l'enveloppe, et les surfaces extrêmes sont conçues comme des pièces moulées (2, 3) en matière plastique qui sont reliées l'une à l'autre par l'intermédiaire de membrures de liaison (2a) espacées dans le sens périphérique et s'étendant, dans la direction axiale, le long de ladite surface de l'enveloppe.

6. Cartouche filtrante selon l'une des revendications précédentes, dans laquelle la surface (4) à activité filtrante est munie d'une membrane polymère nanoporeuse (11).

7. Cartouche filtrante selon la revendication 6, dans laquelle la membrane polymère nanoporeuse (11) présente des pores d'une largeur de 5 - 400 nm, préférentiellement de 15 - 200 nm.

8. Cartouche filtrante selon la revendication 6 ou 7, dans laquelle une couche filtrante supplémentaire au charbon actif (12) est disposée à la face intérieure de la membrane polymère nanoporeuse (11).

9. Cartouche filtrante selon l'une des revendications 6 à 8, dans laquelle une couche filtrante supplémentaire à particules d'argent actives est disposée à la face intérieure de la membrane polymère nanoporeuse (11).

10. Cartouche filtrante selon l'une des revendications 6 à 9, dans laquelle une couche filtrante supplémentaire en un non-tissé filtrant (10) est disposée, en tant que filtre amont, à la face extérieure de la membrane polymère nanoporeuse (11).

11. Cartouche filtrante selon l'une des revendications précédentes, dans laquelle une garniture annulaire d'étanchement (8), faisant saillie vers l'extérieur, est placée autour de l'embout (6).

12. Robinetterie (20) de sortie d'eau, affectée à la délivrance d'eau potable filtrée et comprenant un corps (22) muni d'au moins une arrivée d'eau (24a, 24b), une sortie (26) bifurquant dudit corps (22) de la robinetterie et destinée à de l'eau potable filtrée, et un espace de réception qui peut être parcouru par de l'eau, est dévolu à un filtre d'eau potable et est en liaison de canalisation d'eau avec ladite sortie (26),
**caractérisée par le fait que**
l'espace de réception du filtre est formé par un carter (27) de filtre, situé à l'extrémité de la sortie (26) qui est tournée à l'opposé du corps (22) de la robinetterie ; **par le fait que** ledit carter (27) de filtre comporte un fond (28) pointant vers le bas, dans lequel une ouverture (28a) est pratiquée ; **par le fait qu'**une cartouche filtrante (1), conforme à l'une des revendications précédentes, est insérée dans ledit espace de réception du filtre ; et **par le fait que** l'embout (6) de ladite cartouche, pointant vers l'extérieur, est logé dans ladite ouverture (28a) pratiquée dans ledit fond (28) du carter (27) de filtre, de sorte que de l'eau filtrée peut sortir librement sans contact avec ledit carter (27) de filtre.
